# EUROPÄISCHE PATENTSCHRIFT

(11) **EP 3 037 743 B1**
(45) Veröffentlichungstag und Bekanntmachung des Hinweises auf die Patenterteilung: **01.09.2021**
(21) Anmeldenummer: 15201710.9
(22) Anmeldetag: 21.12.2015
(51) Int. Cl.: F24H 4/04, F24D 17/02, F24H 7/04, F25B 30/02

(54) **HEIZSYSTEM FÜR BRAUCHWASSER**
HEATING SYSTEM FOR SERVICE WATER
SYSTEME DE CHAUFFAGE D'EAU SANITAIRE

(30) Priorität: 23.12.2014 DE 102014226983
(43) Veröffentlichungstag der Anmeldung: 29.06.2016
(73) Patentinhaber: ROTEX Heating Systems GmbH, 74363 Güglingen (DE)
(72) Erfinder: Grammling, Franz, Dr., 74336 Brackenheim (DE)
(74) Vertreter: Hoffmann Eitle

(56) Entgegenhaltungen:
- EP-A2- 2 295 889
- EP-A2- 2 629 020
- DE-A1- 2 558 227
- DE-A1-102009 026 420

## Beschreibung

Die Erfindung betrifft ein Heizsystem für Brauchwasser bzw. Trinkwasser gemäß dem Oberbegriff des Patentanspruchs 1.

Beim Einsatz von Wärmepumpen zur Erwärmung von Brauchwasser bzw. Trinkwasser in Haushalten (Englisch: domestic hot water heat pumps) ist es bekannt, die Wärme aus dem Kältemittel in das Brauchwasser über zwei Barrieren einzubringen. Die Barrieren sind so aufgebaut, dass das Kältemittel bei einem eventuellen Leck in die Atmosphäre bzw. nach außen gelangen kann, ohne dass das Trinkwasser kontaminiert wird. Gelöst wird dies üblicherweise dadurch, dass eine Kältemittelleitung außen auf einen metallischen Tank aufgebracht wird und somit die Kältemittelleitung und die Tankwand die beiden Barrieren bilden.

Die EP 2 295 889 A2 offenbart einen Kondensationswärmetauscher bestehend aus zwei zylindrischen Wärmetauscherabschnitten, die rotationssymmetrisch angeordnet sind und schraubenförmig nach unten sich erstreckende Strömungskanäle aufweisen.. Dieses Dokument befasst sich zudem mit einem Kondensator, der relativ zur theoretisch erforderlichen Wärmetauscherfläche stark überdimensioniert ist.

Ausgehend hiervon liegt der Erfindung die Aufgabe zugrunde, die im Stand der Technik bekannten Heizsysteme weiter zu verbessern und bei einfachem Aufbau eine möglichst energieeffiziente und sichere Brauchwassererwärmung und einen möglichst energieeffizienten und sicheren Abtaubetrieb zu ermöglichen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, das Kältemittel der Wärmepumpe über eine Leitung direkt in der umgebenden Wärmespeicherflüssigkeit zu kondensieren. Dementsprechend wird erfindungsgemäß vorgeschlagen, dass die Heizleitung durch ein einwandiges Rohr gebildet ist und das Rohr innenseitig mit dem Arbeitsfluid und außenseitig mit der Wärmespeicherflüssigkeit beaufschlagbar ist, und dass die Verdampfereinheit unter Wärmeentnahme aus der Wärmespeicherflüssigkeit über den Wärmeübertragungskreis zum Abtauen erwärmbar ist, wobei die Wärmepumpe dazu eingerichtet ist, dass im Abtaubetrieb in dem Wärmeübertragungskreis die Strömungsrichtung durch Umsteuern der Pumpe umgekehrt wird. Auf diese Weise ist bei der Wärmeeinbringung nur eine Barriere zwischen Kältemittel (Arbeitsfluid) und Wärmespeicher vorhanden, wobei diese Barriere für einen direkten Wärmeleitkontakt sorgt, während das zu erwärmende Brauchwasser in dem Brauchwasserwärmetauscher durch eine zweite Barriere auch bei einem Leck in der Heizleitung gegen Zutritt von Kältemittel geschützt bleibt. Zugleich kann auf einen zusätzlichen externen Wärmetauscher verzichtet werden und die erzeugte Wärme mit geringem Bauaufwand genutzt werden.

Durch den Einsatz einer Speicherflüssigkeit ist es somit möglich, dass die Heizleitung als Kondensator bzw. Verflüssigereinheit der Wärmepumpe zur Kondensation des Arbeitsfluids in dem Speicherbehälter angeordnet ist.

Um den Wärmeleitkontakt herzustellen, ist es vorteilhaft, wenn die Heizleitung durch ein metallisches Rohr gebildet ist. Eine weitere Verbesserung sieht vor, dass die Heizleitung in Form einer Rohrwendel in dem Speicherbehälter angeordnet ist, so dass ein hinreichender Fließpfad für eine großvolumige Erwärmung verwirklicht wird.

Von Vorteil ist es auch, wenn die von oben in den Speicherbehälter eintauchende Heizleitung über die Tiefe des Speicherbehälters bis zu dessen Bodenbereich verläuft. Auf diese Weise kann ein großer Temperaturgradient für eine effektive Kondensation des Arbeitsfluids genutzt werden.

Eine baulich besonders vorteilhafte Konstellation sieht vor, dass die Verdampfereinheit als Split- bzw. Außenaggregat der Wärmepumpe zur Aufnahme von Wärme aus der Umgebungsluft insbesondere außerhalb des Gebäudes angeordnet ist. In diesem Zusammenhang ist es energetisch besonders effizient, wenn die Verdampfereinheit unter Wärmeentnahme aus der Wärmespeicherflüssigkeit über den Wärmeübertragungskreis zum Abtauen erwärmbar ist.

Um den Komfort für den Nutzer zu erhöhen, ist es vorteilhaft, wenn in dem Speicherbehälter eine elektrische Heizeinheit, insbesondere ein Elektroheizstab zur bedarfsweisen Erwärmung der Wärmespeicherflüssigkeit angeordnet ist. Im Backup-Betrieb lassen sich auch hohe Speichertemperaturen beispielsweise für eine Anti-Legionellen-Aufheizung erreichen.

Besondere Vorteile vor allem hinsichtlich der Brauchwasserqualität und vereinfachten Einbindung von Wärmequellen lassen sich dadurch erreichen, dass der Speicherbehälter durch einen drucklos mit Wärmespeicherflüssigkeit befüllten Behältertopf gebildet ist. Hierbei wird ein wärmeisolierender Kunststoff als Baumaterial bevorzugt, so dass Wärmeverluste gering bleiben und eine Temperaturschichtung der Speicherflüssigkeit erhalten werden kann.

Eine weitere vorteilhafte Ausgestaltung sieht vor, dass der Brauchwasserwärmetauscher aus einer Rohranordnung besteht, die von der Wärmespeicherflüssigkeit umgeben ist und nach Art eines Durchlauferhitzers vom Brauchwasser durchströmbar ist. Damit kann das Brauchwasser im Durchlauf auf eine einheitliche Temperatur erwärmt werden, während eine hygienisch problematische Wasserentnahme aus einem Kaltsumpf vermieden wird.

In diesem Zusammenhang ist es auch von Vorteil, wenn der Brauchwasserwärmetauscher durch ein Wellrohr vorzugsweise aus Edelstahl gebildet ist, und wenn die Wärmespeicherflüssigkeit aus Wasser ggf. mit Chemikalienzusätzen besteht.

Im Folgenden wird die Erfindung anhand des in der Zeichnung in schematischer Weise dargestellten Ausführungsbeispiels näher erläutert.

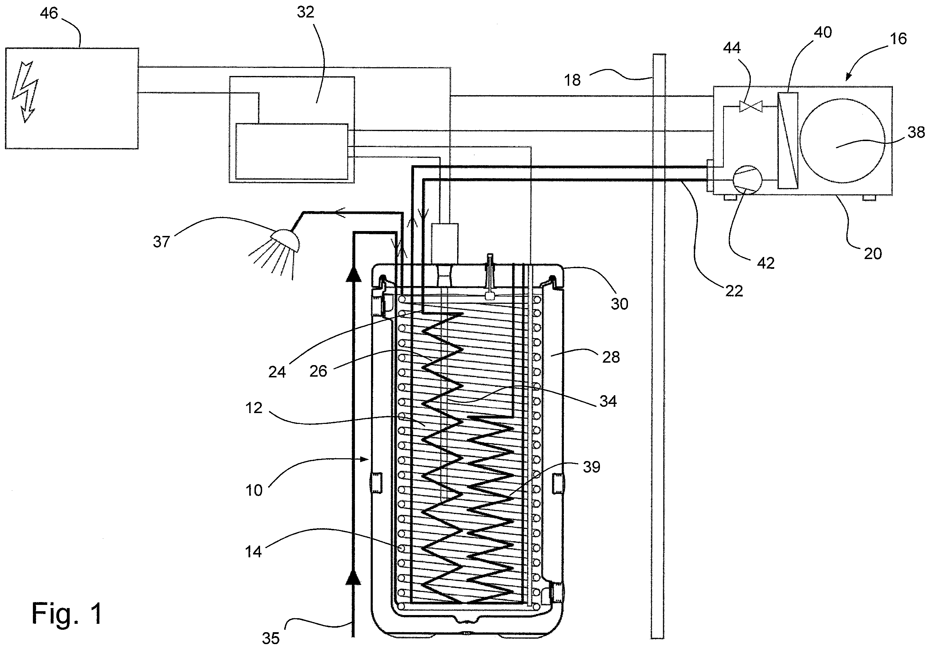

- Fig. 1: zeigt ein Heizsystem zur Brauchwassererwärmung mittels Wärmepumpe in einem Blockschaltbild.

Das in der Zeichnung dargestellte Heizsystem dient zur Erwärmung von Brauchwasser und ggf. auch von Heizwasser in einem Gebäude. Es umfasst im Wesentlichen einen Speicherbehälter 10 zur Aufnahme von Speicherwasser als Wärmespeicherflüssigkeit 12, einen in dem Speicherbehälter 10 angeordneten Brauchwasserwärmetauscher 14 zur Erwärmung von Brauch- bzw. Trinkwasser und eine zur Erwärmung des Speicherwassers 12 betreibbare Wärmepumpe 16, die eine als Außeneinheit außerhalb des Gebäudes 18 angeordnete Verdampfereinheit 20 und einen Wärmeübertragungskreis 22 zur Durchleitung eines Arbeitsfluids bzw. Kältemittels durch die Verdampfereinheit 20 aufweist, wobei der Wärmeübertragungskreis 22 eine in das Speicherwasser 12 eintauchende Heizleitung 24 aufweist, so dass das Arbeitsfluid in der Heizleitung 24 in direktem Wärmeleitkontakt mit dem Speicherwasser 12 steht.

Die Heizleitung 24 ist somit als Verflüssigereinheit bzw. Kondensator der Wärmepumpe 16 zur Kondensation des Arbeitsfluids in dem Speicherbehälter 10 angeordnet. Zweckmäßig besteht die Heizleitung 24 aus einem einwandigen, metallischen Rohr, beispielsweise Kupferrohr, wobei die Rohrwandung eine Wärmetauscherwand zur Abgabe der bei der Kondensation des Arbeitsfluids freiwerdenden Wärme an das Speicherwasser 12 bildet. Um eine effektive Wärmeübertragung insbesondere in einem bodennahen Kaltsumpf des Speicherwassers 12 zu ermöglichen, verläuft die von oben in den Speicherbehälter 12 eintauchende Heizleitung 24 über die Tiefe des Speicherbehälters 10 bis zu dessen Bodenbereich, wobei zumindest der untere Heizleitungsabschnitt in Form einer Rohrwendel 26 ausgebildet ist.

Der Speicherbehälter 10 umfasst einen drucklos gehaltenen wärmeisolierten Behältertopf 28 aus Kunststoff, der an einer nach oben weisenden Öffnung durch ein Deckelteil 30 schließbar ist. Der Speicherbehälter 10 bedarf keiner besonderen Strukturfestigkeit, weil das Speicherwasser 12 allein zur Wärmespeicherung dient und ohne Betriebsüberdruck gegenüber Atmosphäre vorgehalten wird.

Zur hilfsweisen direkten Wärmeeinspeisung greift ein mittels einer Regeleinrichtung 32 ansteuerbarer Elektroheizstab 34 von der Deckelseite her in den Speicherbehälter 10 ein.

Der in der Nähe der Umfangswand des Speicherbehälters 10 schraubenförmig über dessen Höhe verlaufende Brauchwasserwärmetauscher 14 besteht aus einem Edelstahl-Rohrregister, das von Speicherwasser 12 umgeben ist und vom Brauchwasser über einen Netzanschluss 35 zu einem Verbraucher 37 hin nach Art eines Durchlauferhitzers durchströmbar ist. Dabei kann auch bei einer Temperaturschichtung das entnommene Brauch- bzw. Trinkwasser einheitlich erwärmt werden, während bei einem einfachen Druckbehälter der Bodenbereich häufig kalt bleibt und dadurch anfälliger für bakterielle Verunreinigung ist.

An einen weiteren Wärmetauscher 39 kann ein nicht gezeigter Heizungskreis für eine Gebäudeheizung, beispielsweise eine Fußbodenheizung angeschlossen werden.

Im Arbeitsbetrieb der Wärmepumpe 16 wird in der Außeneinheit 20 über einen Ventilator 38 und einen Wärmetauscher 40 Umweltwärme aus der Umgebungsluft dem Arbeitsfluid zugeführt, so dass dieses aufgrund seines niedrigen Siedepunkts vom flüssigen in den gasförmigen Aggregatzustand übergeht. Das mittels Pumpe 42 unter Temperaturerhöhung verdichtete Arbeitsfluid wird durch den Wärmeübertragungskreis 22 in Pfeilrichtung zu der Heizleitung 24 transportiert. Dort kann die Wärmeenergie direkt in das Speicherwasser 12 abgegeben werden. Das dabei verflüssigte Arbeitsfluid wird anschließend im Expansionsventil 44 dekomprimiert und dabei abgekühlt, so dass der Kreislauf geschlossen wird und eine Wärmeaufnahme wieder möglich ist.

Wenn die Wärmepumpe 16 momentan mit schlechtem Wirkungsgrad arbeitet bzw. nicht genügend Wärme liefert, kann auch der elektrische Heizstab 34 für einen Backup-Betrieb angesteuert werden, um das Speicherwasser 12 mit elektrischer Energie aus dem Stromnetz 46 direkt aufzuheizen.

Die energieeffizient in das Speicherwasser 12 eingebrachte Wärmeenergie kann erfindungsgemäß für einen Abtaubetrieb der Wärmepumpe 16 bei tiefen Außentemperaturen genutzt werden. Zum Abtauen wird im Speicherwasser 12 gespeicherte Wärme abgeholt und über den Plattenwärmetauscher 40 entgegen der regulären Durchgangsrichtung primärseitig übertragen. Dabei wird in dem Wärmeübertragungskreislauf 22 die Strömungsrichtung durch Umsteuern der Pumpe 42 umgekehrt, so dass ein Durchfluss entgegen der gezeigten regulären Strömungsrichtung erfolgt und die in dem Arbeitsmittel transportierte Wärme unter Prozessumkehr zum kurzfristigen Abtauen der vereisten Verdampfereinheit 20 genutzt werden kann.

## Patentansprüche

1. Heizsystem für Brauchwasser mit einem Speicherbehälter (10) für eine Wärmespeicherflüssigkeit (12), einem in dem Speicherbehälter (10) angeordneten, mit Brauchwasser beaufschlagbaren Brauchwasserwärmetauscher (14) und einer zur Erwärmung der Wärmespeicherflüssigkeit (12) eingerichteten Wärmepumpe (16), die eine Verdampfereinheit (20) zur Wärmeaufnahme und einen Wärmeübertragungskreis (22) zur Durchleitung eines Arbeitsfluids durch die Verdampfereinheit (20) aufweist, wobei die Wärmepumpe (16) eine Pumpe (42) zur Verdichtung des Arbeitsfluids aufweist, wobei der Wärmeübertragungskreis (22) eine in die Wärmespeicherflüssigkeit (12) eintauchende Heizleitung (24) aufweist, wobei das Arbeitsfluid der Wärmepumpe (16) in der Heizleitung (24) in Wärmeleitkontakt mit der Wärmespeicherflüssigkeit (12) steht, **dadurch gekennzeichnet, dass** die Heizleitung (24) durch ein einwandiges Rohr gebildet ist und das Rohr innenseitig mit dem Arbeitsfluid und außenseitig mit der Wärmespeicherflüssigkeit (12) beaufschlagbar ist, und dass die Verdampfereinheit (20) unter Wärmeentnahme aus der Wärmespeicherflüssigkeit (12) über den Wärmeübertragungskreis (22) zum Abtauen erwärmbar ist, wobei die Wärmepumpe (16) dazu eingerichtet ist, dass im Abtaubetrieb in dem Wärmeübertragungskreis (22) die Strömungsrichtung durch Umsteuern der Pumpe (42) umgekehrt wird.

2. Heizsystem nach Anspruch 1, **dadurch gekennzeichnet, dass** die Heizleitung (24) durch ein metallisches Rohr gebildet ist.

3. Heizsystem nach Anspruch 1 oder 2, **dadurch gekennzeichnet, dass** die Heizleitung (24) in Form einer Rohrwendel in dem Speicherbehälter (10) angeordnet ist.

4. Heizsystem nach einem der Ansprüche 1 bis 3, **dadurch gekennzeichnet, dass** die von oben in den Speicherbehälter (10) eintauchende Heizleitung (24) über die Tiefe des Speicherbehälters (10) bis zu dessen Bodenbereich verläuft.

5. Heizsystem nach einem der Ansprüche 1 bis 4, **dadurch gekennzeichnet, dass** die Verdampfereinheit (20) als Split-Aggregat der Wärmepumpe (16) zur Aufnahme von Wärme aus der Umgebungsluft insbesondere außerhalb des Gebäudes angeordnet ist.

6. Heizsystem nach einem der Ansprüche 1 bis 5, **dadurch gekennzeichnet, dass** in dem Speicherbehälter (10) eine elektrische Heizeinheit (34), insbesondere ein Elektroheizstab zur bedarfsweisen Erwärmung der Wärmespeicherflüssigkeit (12) angeordnet ist.

7. Heizsystem nach einem der Ansprüche 1 bis 6, **dadurch gekennzeichnet, dass** der Speicherbehälter (10) durch einen drucklos mit Wärmespeicherflüssigkeit (12) befüllten wärmeisolierten Behältertopf (28) vorzugsweise aus Kunststoff gebildet ist.

8. Heizsystem nach einem der Ansprüche 1 bis 7, **dadurch gekennzeichnet, dass** der Brauchwasserwärmetauscher (14) aus einer Rohranordnung besteht, die von der Wärmespeicherflüssigkeit (12) umgeben ist und nach Art eines Durchlauferhitzers vom Brauchwasser durchströmbar ist.

9. Heizsystem nach einem der Ansprüche 1 bis 8, **dadurch gekennzeichnet, dass** der Brauchwasserwärmetauscher (14) durch ein Wellrohr vorzugsweise aus Edelstahl gebildet ist.

10. Heizsystem nach einem der Ansprüche 1 bis 9, **dadurch gekennzeichnet, dass** die Wärmespeicherflüssigkeit (12) aus Wasser ggf. mit Chemikalienzusätzen besteht.

## Claims

1. Heating system for service water with a storage tank (10) for a heat accumulator fluid (12), a heat exchanger (14), arranged in the storage tank (10), against which service water can impinge, and a heat pump (16), configured to heat up the heat accumulator fluid (12), which comprises an evaporator unit (20) for absorbing heat and a heat transmission circuit (22) for conducting a working fluid through the evaporator unit (20), wherein the heat pump (16) comprises a pump (42) for compressing the working fluid, wherein the heat transmission circuit (22) includes a heating pipe (24) which is immersed in the heat accumulator fluid (12), wherein the working fluid of the heat pump (16) is, in the heating pipe (24), in heat-conducting contact with the heat accumulator fluid (12), **characterised in that** the heating pipe (24) is formed by a single-walled pipe and the pipe can be impinged against on the inner side with the working fluid and on the outer side with the heat accumulator fluid (12), and that the evaporator unit (20) can, for defrosting purposes, be heated via the heat transmission circuit (22), extracting heat from the heat accumulator fluid (12), wherein the heat pump (16) is configured such that, in defrost mode, the direction of flow in the heat transmission circuit (22) is reversed by reversing the pump (42).

2. Heating system according to claim 1, **characterised in that** the heating pipe (24) is formed by a metallic pipe.

3. Heating system according to claim 1 or 2, **characterised in that** the heating pipe (24) is arranged in the storage tank (10) in the form of a pipe coil.

4. Heating system according to one of the claims 1 to 3, **characterised in that** the heating pipe (24) immersed from above in the storage tank (10) extends over the depth of the storage tank (10) as far as its base region.

5. Heating system according to one of the claims 1 to 4, **characterised in that** the evaporator unit (20), as a split system unit of the heat pump (16), is in particular arranged outside of the building in order to absorb heat from the ambient air.

6. Heating system according to one of the claims 1 to 5, **characterised in that** an electrical heating unit (34), in particular an electrical heating element for heating up the heat accumulator fluid (12) when required, is arranged in the storage tank (10).

7. Heating system according to one of the claims 1 to 6, **characterised in that** the storage tank (10) is formed by a thermally insulated tank vessel (28), preferably made of plastic, filled in an unpressurised manner with heat accumulator fluid (12).

8. Heating system according to one of the claims 1 to 7, **characterised in that** the service water heat exchanger (14) consists of a pipe arrangement which is surrounded by the heat accumulator fluid (12) and through which service water flows in the manner of a continuous-flow heater.

9. Heating system according to one of the claims 1 to 8, **characterised in that** the service water heat exchanger (14) is formed by a corrugated pipe, preferably made of stainless steel.

10. Heating system according to one of the claims 1 to 9, **characterised in that** the heat accumulator fluid (12) consist of water, optionally with chemical additives.

## Revendications

1. Système de chauffage pour de l'eau sanitaire avec un récipient de stockage (10) pour un liquide d'accumulateur de chaleur (12), un échangeur de chaleur d'eau sanitaire (14) agencé dans le récipient de stockage (10), pouvant être alimenté avec de l'eau sanitaire et une pompe à chaleur (16) conçue pour le chauffage du liquide d'accumulateur de chaleur (12) qui présente une unité d'évaporateur (20) pour l'absorption de chaleur et un circuit de transmission de chaleur (22) pour l'acheminement d'un fluide de travail par l'unité d'évaporateur (20), dans lequel la pompe à chaleur (16) présente une pompe (42) pour la compression du fluide de travail, dans lequel le circuit de transmission de chaleur (22) présente une conduite de chauffage (24) pénétrant dans le liquide d'accumulateur de chaleur (12), dans lequel le fluide de travail de la pompe à chaleur (16) dans la conduite de chauffage (24) est en contact de conduction thermique avec le liquide d'accumulateur de chaleur (12), **caractérisé en ce que** la conduite de chauffage (24) est formée par un tube à simple paroi et le tube peut être alimenté côté intérieur avec le fluide de travail et côté extérieur avec le liquide d'accumulateur de chaleur (12),
et **en ce que** l'unité d'évaporateur (20) peut être chauffée par prélèvement de chaleur du liquide d'accumulateur de chaleur (12) par le biais du circuit de transmission de chaleur (22) pour le dégivrage, dans lequel la pompe à chaleur (16) est conçue afin que le sens d'écoulement soit inversé dans le mode de dégivrage dans le circuit de transmission de chaleur (22) par commutation de la pompe (42).

2. Système de chauffage selon la revendication 1, **caractérisé en ce que** la conduite de chauffage (24) est formée par un tube métallique.

3. Système de chauffage selon la revendication 1 ou 2, **caractérisé en ce que** la conduite de chauffage (24) est agencée sous la forme d'un tube spiralé dans le récipient de stockage (10).

4. Système de chauffage selon l'une quelconque des revendications 1 à 3, **caractérisé en ce que** la conduite de chauffage (24) pénétrant par le dessus dans le récipient de stockage (10) s'étend sur la profondeur du récipient de stockage (10) jusqu'à sa zone de fond.

5. Système de chauffage selon l'une quelconque des revendications 1 à 4, **caractérisé en ce que** l'unité d'évaporateur (20) est agencée comme groupe splitté de la pompe à chaleur (16) pour l'absorption de chaleur provenant de l'air ambiant en particulier en dehors du bâtiment.

6. Système de chauffage selon l'une quelconque des revendications 1 à 5, **caractérisé en ce qu'**une unité de chauffage (34) électrique, en particulier une cartouche chauffante électrique est agencée dans le récipient de stockage (10) pour le chauffage du liquide d'accumulateur de chaleur (12) en cas de besoin.

7. Système de chauffage selon l'une quelconque des revendications 1 à 6, **caractérisé en ce que** le récipient de stockage (10) est formé par un pot de récipient (28) thermiquement isolé rempli sans pression avec du liquide d'accumulateur de chaleur (12) de préférence en matière plastique.

8. Système de chauffage selon l'une quelconque des revendications 1 à 7, **caractérisé en ce que** l'échangeur de chaleur d'eau sanitaire (14) consiste en un agencement tubulaire qui est entouré par le liquide d'accumulateur de chaleur (12) et peut être traversé comme un chauffe-eau rapide par de l'eau sanitaire.

9. Système de chauffage selon l'une quelconque des revendications 1 à 8, **caractérisé en ce que** l'échangeur de chaleur d'eau sanitaire (14) est formé par un tube ondulé de préférence en acier inoxydable.

10. Système de chauffage selon l'une quelconque des revendications 1 à 9, **caractérisé en ce que** le liquide d'accumulateur de chaleur (12) consiste en de l'eau éventuellement avec des additifs chimiques.
